# EUROPEAN PATENT SPECIFICATION

(11) **EP 4 180 676 B1**
(45) Date of publication and mention of the grant of the patent: **02.07.2025**
(21) Application number: 22207386.8
(22) Date of filing: 15.11.2022
(51) Int. Cl.: F16B 45/02, B64D 1/22, B64U 101/64

(54) **AN UNMANNED AERIAL VEHICLE (UAV)**
UNBEMANNTES LUFTFAHRZEUG
VÉHICULE AÉRIEN SANS PILOTE

(30) Priority: 15.11.2021 CN 202122787811 U
(43) Date of publication of application: 17.05.2023
(73) Proprietor: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- CN-A- 105 107 100
- GB-A- 158 304
- US-A1- 2021 309 357
- US-B2- 10 577 105

## Description

### Technical Field

The invention relates to the technical field of UAV manufacturing, in particular to a UAV.

### Background Art

With the continuous development of UAV technology, more and more industries and individuals use a UAV for transportation and the delivery of items. The existing UAVs usually use electronic-controlled delivery mechanism to lift the pieces to be transported and release them when they arrive at the destination. However, the control signal is easily affected by obstacles, and the electronically controlled delivery mechanism increases the weight and manufacturing cost of UAV.

As a result, some UAVs use an automatic mechanical delivery structure. Mechanical delivery structures often include a mounting pieces and a reset pieces. During UAV transportation, the mounting piece lifts the piece to be transported, and the reset piece deforms under the weight of the piece to be transported. When the UAV reaches the designated location and the piece to be transported touches the ground, the force of the piece to be transported on the reset assembly disappears. The reset assembly makes the piece to be transported break away from the mounting piece, thus automatic decoupling is realized.

However, the UAV has not yet lifted the piece to be transported which it is just hooked up to the mounting piece, and the piece to be transported still touches with the ground, and the piece to be transported is located near the opening of the mounting groove. At this time, the piece to be transported can be easily separated from the mounting piece under the action of the reset assembly. Thus, an operator needs to press the piece to be transported, which affects UAV operation and transportation efficiency.

US 2021/ 309 357 A1 relates to a UAV, which includes a chassis, a power supply mounted to the chassis, a control system operable to receive power from the power supply, at least one rotor operable to generate lift under control of the control system, and a winch mounted to the chassis. CN 105 107 100 A relates to a rescuing highaltitude hook device, which comprises a hook body and a pivotally connected retaining arm, and wherein via wireless remote control the open-close state of the hook shall be controlled in order to fix the hook device to a high altitude object without manual climbing. GB 158 304 A relates to a disconnectable coupling particularly for connecting a load to a parachute. US 10 577 105 B2 relates to a payload retrieval apparatus.

### Summary of the Invention

The invention aims to provide a UAV, which can realize the automatic delivery of the piece to be transported, and at the same time can conveniently hook the piece to be transported to the delivery structure to ensure UAV transportation efficiency.

To this end, the invention uses the following technical solution:
A UAV for delivering a piece to be transported, wherein the UAV comprises a UAV body and
a delivery structure, and the delivery structure comprises:
   a mounting piece connected to the UAV body, and a mounting groove arranged on
   the mounting piece, wherein a direction of an opening of the mounting groove extends upwards, and the piece to be transported can be hooked into the mounting groove; a reset assembly configured to deform under the weight of the piece to be transported when it is lifted, and reset to drive the piece to be transported away from the mounting groove when the piece to be transported touches the ground; and a limiting piece, a first end of the limiting piece being connected to the reset assembly, and a second end of the limiting piece configured for being connected with the mounting piece by magnetic adsorption to seal the opening of the mounting groove when the piece to be transported is hooked but not lifted, wherein when the piece to be transported is lifted, the reset assembly can drive the limiting piece to move so as to separate the second end from the mounting piece.

Moreover, the second end of the limiting piece can be provided with a first magnetic piece, a second magnetic piece opposite the magnetism of the first magnetic piece can be arranged on the mounting piece.

Moreover, the first magnetic piece and the limiting piece can be detachable; and/or the second magnetic piece and the mounting piece can be detachable.

Moreover, the first end of the limiting piece and the reset piece can be rotationally connected.

Moreover, a chute connected with the mounting groove can also be provided on the mounting piece, the reset assembly can be arranged in the chute, the reset piece can include a connected reset piece and a slide block; the reset piece can be located between the slide block and the bottom of the chute; the slide block and the chute can slide together and can be abutted against the piece to be transported, the limiting piece can be connected with the slide block.

Moreover, a guide hole can be arranged on the slide block, one side of the reset piece near the slide block can be penetrated into the guide hole and can be abutted against the top wall of the guide hole.

Moreover, the reset assembly can further include a guide piece arranged at the bottom of the chute, the end of the reset piece away from the slide block can be sleeved on the guide piece.

Moreover, the upper side wall of the mounting groove can further be provided with an avoidance groove to ensure the automatic decoupling of the piece to be transported.

Moreover, one of the side wall of the slide block and the side wall of the slide groove can be provided with a protrusion, and the other of the two can be provided with a guide groove, the protrusion can slide and fit in the guide groove.

Moreover, there can be at least two delivery structures, and each delivery structure is connected to the UAV body.

The benefit of the invention:
The invention discloses a UAV, which comprises a UAV body and a delivery structure, the delivery structure comprises a mounting piece, a reset assembly and a limiting piece. The reset assembly is contacted to the UAV body. The mounting groove is arranged on the mounting piece. The opening direction of the mounting groove extends upward, and the piece to be transported can be hooked into the mounting groove. The reset assembly is configured to deform under the weight of the piece to be transported when it is lifted, and reset to drive the piece to be transported away from the mounting groove when the piece to be transported touches the ground. The first end of the limiting piece is connected to the reset assembly when the piece to be transported is not lifted, and the second end of the limiting piece can be connected with the mounting piece by magnetic adsorption to seal the opening of the mounting groove. When the piece to be transported is lifted, the reset assembly can drive the limiting piece to move so as to separate the second end from the mounting piece. The UAV can realize the automatic release of the piece to be transported, and limit the position when the piece to be transported is not lifted, so as to avoid the piece to be transported fall from the mounting slot. The limiting piece can open the mounting slot after the UAV lifts the piece to be transported. The invention can enable automatic decoupling of the piece to be transported after landing, thereby enabling the UAV convenience and high transportation efficiency.

### Detailed Description

Fig. 1 is the structure diagram of the delivery structure provided by the embodiment in the invention
Fig. 2 is the structure diagram of the delivery structure provided by the embodiment in the invention

Legends in the figures:1-mounting piece, 11-mounting groove, 12-chute, 121-avoidance part; 122-guide groove; 13-avoidance groove;
2-reset assembly; 21-reset piece; 22-slide block; 221-holding slot; 222-protrusion; 23-guide piece;
3-limiting piece; 31-lug part;
4-fastener;
100- piece to be transported.

### Description of the Preferred Embodiments

The presently claimed invention is further described in detail in combination with the attached drawings. Obviously, the embodiments described are only a part of the embodiments of the invention rather than all embodiments. Based on the embodiment of the invention, other embodiments may be obtained by technical personnel in the field without making creative labor, said other embodiments belonging to the scope of the invention as far as they fall within the scope of the appended claims.

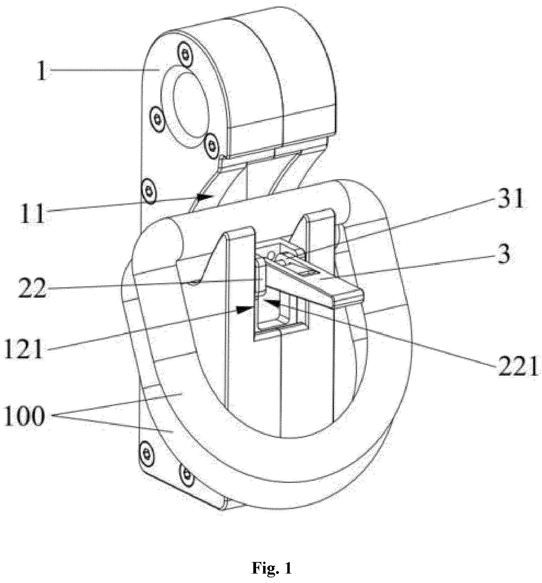

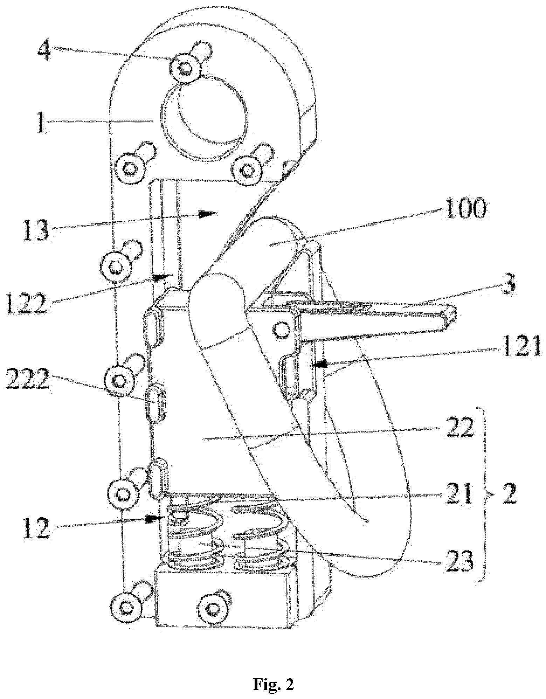

The invention provides a UAV for transporting a piece to be transported 100, as shown in Figs. 1 and 2. The UAV includes a UAV body and a delivery structure. The delivery structure comprises a mounting piece 1, a reset assembly 2 and a limiting piece 3. The mounting piece 1 is connected to the UAV body, and an mounting groove 11 is arranged on the mounting piece 1, and the opening direction of the mounting groove 11 extends upward, the piece to be transported 100 can be hooked into the mounting groove 11; and the reset assembly 2 is configured to deform under the weight of the piece to be transported 100 when the piece to be transported 100 is lifted, when the piece to be transported 100 touches the ground, the reset assembly 2 resets to drive the piece to be transported 100 move towards the opening direction of the mounting groove 11 and to leave from the mounting groove 11. The first end of the limiting piece 3 is connected to the reset assembly 2, when the piece to be transported 100 is not lifted, the second end of the limiting piece can be connected to the mounting piece 1 by magnetic adsorption to seal the opening of the mounting groove 11, and when the piece to be transported 100 is lifted, the reset assembly 2 can drive the limiting piece 3 to move so that the second end of the limiting piece 3 is separated from the mounting piece 1. Before transporting the piece to be transported 100, the piece to be transported 100 is hooked up to the mounting piece 11, the piece to be transported 100 is not lifted during the process, the limiting piece 3 is then made to block the mounting groove 11 to prevent the piece to be transported 100 to be separated from the mounting groove 11 by the reset action of the reset assembly 2. When the UAV lifts the piece to be transported 100, the piece to be transported 100 moves to the bottom of the mounting groove 11 and deforms the reset assembly 2 under the weight of the piece to be transported 100. The reset assembly 2 drives the limiting piece 3 to move and the second end of the limiting piece 3 is separated from the mounting piece 1, thereby opening the opening of mounting groove 11. When the piece to be transported 100 is being delivered and touches the ground, the force acting on the reset assembly 2 disappears, and the reset assembly 2 resets and drives the piece to be transported 100 to detach from the delivery structure by the mounting groove 11. The UAV can realize the automatic release of the piece to be transported 100, and limit the position by the limiting piece 3 when the piece to be transported 100 is not lifted, so as to avoid the piece to be transported 100 fall from the mounting groove 11. It is no need for the operator to limit the piece to be transported 100 manually. The limiting piece 3 can still open the opening of the mounting groove 11 after lifting so as to enable automatic decoupling of the piece to be transported 100 after landing, thereby enabling the UAV convenience and high transportation efficiency.

In this embodiment, the piece to be transported 100 can be a cargo holder, a rescue container, or a cargo to be transported, and can be customized according to actual needs. It is not restricted in this embodiment.

In particular, the second end of the limiting piece 3 is provided with the first magnetic piece, and the mounting piece 1 is provided with a second magnetic piece which is opposite to the magnetism of the first magnetic piece, so that when the piece to be transported 100 is not lifted, the first magnetic member and the second magnetic member are able to attract each other so that the limiting piece 3 seals the opening of the mounting groove 11.

Moreover, the first magnetic piece and the second magnetic piece are both permanent magnets, with simple structures and high reliability.

Further, the first magnetic piece and the limiting piece 3 are detachably connected, so that the first magnetic piece can be replaced when it is necessary, and thus reducing the maintenance cost of the delivery structure. Similarly, the second magnetic piece is also detachably connected to mounting piece 1 so that it can be replaced when it is necessary.

Furthermore, the angle between the extending direction of the mounting groove 11 and the vertical direction is 15 ° -45 °, on one hand it can ensure the reliable transportation of the piece to be transported 100 and prevent the piece to be transported 100 to be separated from the mounting groove 11 during transportation, and on the other hand, when the piece to be transported 100 touches the ground, the piece to be transported 100 can be smoothly separated from the mounting groove 11 under the reset action of the reset assembly 2.

Furthermore, the first end of the limiting piece 3 is rotationally connected with the reset assembly 2 so that the limiting piece 3 can rotate and cause the first magnetic piece and the second magnetic piece to attract each other when the piece to be transported 100 is not lifted. When the piece to be transported 100 is lifted, the reset assembly 2 deforms and drives the limiting piece 3 away from the second magnetic piece. At the same time, the second end of the limiting piece 3 rotates downward under the weight of itself, and thus will not affect the automatic delivery of the piece to be transported 100.

Of course, the connection mode of the limiting piece 3 and the reset assembly 2 is not limited. In other embodiments, the limiting piece 3 may also be an elastic arm etc.. The first end of the elastic arm is fixed to the reset assembly 2, the first magnetic piece is arranged at the second end of the elastic arm to simplify the connection between the limiting piece 3 and the reset assembly 2. The structure can be customized according to actual needs. The structure is not restricted in this embodiment.

The settings for reset assembly 2 are described below.

In the present embodiment, as shown in figure 2, a chute 12 in connection with the mounting groove 11 is further arranged on the mounting piece 1, and the reset assembly 2 is arranged in the chute 12 and is abutted against the piece to be transported 100. The mounting groove 11 can provide a limiting effect on the piece to be transported 100 by providing an additional chute 12 to accommodate the reset assembly 2. That is, the piece to be transported 100 can be hooked into the bottom of the mounting groove 11, and at the same time, the installation of the chute 12 can further reduce the weight of the delivery structure, thereby improving the endurance of the UAV.

Of course, the setting location for the reset assembly 2 is not limited herein. In other embodiments, the reset assembly 2 may be arranged in the mounting groove 11, and both two ends of the reset assembly 2 can be connected with the bottom of the mounting groove 11 and the piece to be transported 100 respectively. The invention can be customized according to actual needs, and this embodiment makes no restriction on this.

Furthermore, the chute 12 extends along the vertical direction, and a larger size of the chute 12 can be obtained when the size of the mounting piece 1 is fixed, comparing with the case where the chute 12 extends in an angle with the horizontal direction, the invention can provide a larger installation space for the reset assembly 2 and further reduce the weight of the delivery structure.

Furthermore, as shown in figure 2, the reset assembly 2 includes a connected reset piece 21 and a slide block 22, and the reset piece 21 is located between the bottom of the slide block 22 and the chute 12. The slide block 22 slides with the chute 12 and can be connected with the piece to be transported 100, and the limiting piece 3 is connected with the slide block 22. The reliability and stability of the connection of the reset assembly 2 and the piece to be transported 100 can be guaranteed by the connection of the slide block 22 and the piece to be transported 100, and the piece to be transported 100 can be automatically released upon landing. Wherein, the side wall of the slide chute 12 may be provided with an avoidance part 121 to evade the limiting piece 3 when the limiting piece 3 slides with the slide block 22.

In details, as shown in figure 1, the first end of the limiting piece 3 is provided with two spaced lug parts 31, each of which is provided with a first connecting hole, and the slide block 22 is provided with a holding slot 221. The two opposite side walls of the holding slot 221 are respectively provided with a second connecting hole. The delivery structure also comprises a connecting shaft, which passes through a first connecting hole, two of second connecting holes and another second connecting hole in turn, thus the rotary connection of the limiting piece 3 and the slide block 22 is realized. Wherein, because two lug parts 31 are arranged, the two lug parts 31 can be slightly close to each other under the action of external force when the limiting piece 3 is installed, thus the limiting piece 3 can be conveniently installed on the slide block 22. In addition, the arrangement of the two lug parts 31 also facilitates to reduce the overall weight of the delivery structure.

As an example, the reset piece 21 is a spring.

It is understood that the reset piece 21 has a preset stiffness to enable the reset piece 21 to be compressed under the gravity of the piece to be transported 100 during transport. The piece to be transported 100 can approach to the bottom of the mounting groove 11 with a high transportation reliability. When the piece to be transported 100 touches the ground, the reset action of the reset piece 21 can also drive the piece to be transported 100 to remove from the mounting groove 11, then achieve automatic decoupling.

Furthermore, a guide hole is arranged on the slide block 22, and one end of the reset piece 21 near the slide block 22 is sleeved in the guide hole and is abutted against the top wall of the guide hole. On one hand it can provide a limiting effect to the reset piece 21, to ensure the reset effect of the reset piece 21, so that the piece to be transported 100 can automatically unhook, and on the other hand, the connection of the reset piece 21 and the slide block 22 can be simply realized, the number if components used for connection can be reduced, and the manufacturing cost of the delivery structure can be cut.

To further improve the guiding effect on the reset piece 21, the reset assembly 2 also includes a guide piece 23, which is arranged at the bottom of the mounting groove 11. The end of the reset piece 21 which is far from the slide block 22 is sleeved on the guide piece 23. The setting of the guide piece 23 can further improve the guiding function to the reset piece 21, thus further ensuring the reset effect of the reset piece 21. It is understood that the setting of the guide piece 23 will not affect the formation of the slide piece 22 along the vertical direction, since the guide piece 23 can extend into the guide hole when the slide block 22 moves down.

Specifically, the guide piece 23 comprises a thread part and a guide part which are connected sequentially. The first thread hole is arranged on the mounting piece 1; the thread part is matched with the first thread hole, and the reset piece 21 is set on the guide part. The connection of the guide piece 23 and the mounting piece 1 is realized by the matching thread, which can facilitate the assembly of the delivery structure and reduce the manufacturing cost.

Furthermore, the number of the reset piece 21 is at least two, and each reset piece 21 is connected with the slide block 22 to improve the stability of the slide block 22 when sliding in the mounting groove 11, thus further improving the stability and reliability of the contact between the slide block 22 and the piece to be transported 100. In the present embodiment, the number of the reset pieces 21 is two. Two reset pieces 21 are spaced arranged in the mounting groove 11, and the guide hole and the guide piece 23 are respectively arranged one by one with the reset piece 21.

Furthermore, as shown in fig. 2, one of the side walls of the slide block 22 and the chute 12 is provided with a protrusion 222, and the other of the side walls of the slide block 22 and the slide chute 12 is provided with a guide chute 122, the protrusion 222 can slide and fit in the guide groove 122 to further provide a guide for the slide block 22, thereby increasing the sliding smoothness of the slide block 22 and ensuring the abutting effect of the piece to be transported 100.

In the present embodiment, at least two protrusions 222 are arranged on both sides of the slide block 22, and the guide grooves 122 are arranged on the two side walls of the chute 12. Each protrusion 222 can slide and fit in the corresponding guide groove 122 to further improve the guiding function of the slide block 22.

Furthermore, the upper side wall of the mounting groove 11 is further provided with an avoidance groove 13 to avoid the sliding of the slide block 22, thereby ensuring the automatic decoupling of the piece to be transported 100. In addition, the avoidance groove 13 can further reduce the weight of the delivery structure.

Furthermore, the mounting piece 1 comprises two shells arranged opposite each other, which are enclosed to form the chute 12, the mounting groove 11, and the avoidance groove 13 to facilitate the processing and assembly of the reset assembly 2.

In particular, at least one second thread hole is arranged on a shell, and a hole corresponding to the second thread hole is arranged on the other shell. The delivery structure still comprises a fastener 4. The fastener 4 can pass by the through hole and be threaded into the second thread hole, thereby realizing the connection of the two shells.

Furthermore, there are at least two delivery structures, and each delivery structure is connected with the UAV body to improve the UAV transport capability and expand UAV range of usage.

It is understood that each delivery structure may be used to lift or deliver a piece to be transported 100, and each delivery structure may also be used to lift or deliver at least two pieces to be transported 100. The structure can be set according to the actual transportation needs, and this embodiment makes no restrictions on this.

In the description of the description, it should be noted that, the terms "Center", "Top", "Bottom", "Left", "Right", "Vertical", "Level", "Inside", "Outside" indicate a position or position relationship based on the position or position relationship shown in the attached drawings, for the sole purpose of facilitating and simplifying the description of the embodiment. The terms do not indicate or imply that the device or structure referred to must have a specific orientation or must be constructed and operated in a specific orientation. Therefore, it cannot be understood as a restriction to the invention. In addition, the terms "First" and "Second" are used only to describe the purpose and cannot be understood as indicating the importance level. Wherein, the terms "First position" and "Second position" are two different positions.

The terms "Installed", "Connected", "Combined", "Fixed" should be understood in a broad understanding unless otherwise specified. For example, they may be fixed or dismountable connections; mechanical or electrical connections; direct or indirect connections through an intermediary; an internal connection between two elements or interactions between two elements. For the ordinary technical personnel in the field, the concrete meaning of the above-mentioned terms in the invention shall be understood according to specific conditions.

Unless otherwise specified, the first feature "Up" or "Down" on the second feature may include direct contact between the first feature and the second feature; it may also include first features and second features that are not in direct contact but are in contact with each other through additional features. Moreover, that the first feature is "Above", "Over" and "On" the second feature includes that the first feature is directly above and obliquely above the second feature, or it simply means that that the first feature has a higher horizontal height than the second feature. Moreover, that the first feature is "Below", "Underneath" and "Under" the second feature includes that the first feature is directly below and obliquely below the second feature, or it simply means that the first feature has a lower horizontal height than the second feature.

In addition, the above-mentioned is an exemplary embodiment of the invention and applied technical principles. Although the invention is described in detail through the above embodiment, the invention is not limited to the above embodiment, but further includes equivalent embodiments falling within the scope of the attached claims.

## Claims

1. A UAV for delivering a piece to be transported (100), wherein the UAV includes a UAV body and a delivery structure, wherein delivery structure comprises:
a mounting piece (1) connected to the UAV body, and a mounting groove (11) arranged on the mounting piece (1), wherein a direction of an opening of the mounting groove (11) extends upwards, and the piece to be transported (100) is configured to be hooked into the mounting groove (11); and
a reset assembly (2)configured to deform under a weight of the piece to be transported (100) when the piece to be transported (100) is lifted, and reset to drive the piece to be transported (100) away from the mounting groove (11) when the piece to be transported (100) touches the ground;
**characterized in that**
the delivery structure further comprises:
a limiting piece (3), a first end of the limiting piece (3) being connected to the reset assembly (2), and a second end of the limiting piece (3) configured to be connected with the mounting piece (1) by magnetic adsorption to seal the opening of the mounting groove (11) when the piece to be transported (100) is hooked but not lifted, wherein when the piece to be transported (100) is lifted, the reset assembly (2) is configured to drive the limiting piece (3) to move so as to separate the second end from the mounting piece (1).

2. The UAV according to Claim 1, which is **characterized in that** the second end of the limiting piece (3) is provided with a first magnetic piece, and a second magnetic piece opposite a magnetism of the first magnetic piece arranged on the mounting piece (1).

3. The UAV according to claim 2, which is **characterized in that** the first magnetic piece and the limiting piece (3) are detachable; and/or the second magnetic piece and the mounting piece (1) are detachable.

4. The UAV according to claim 1, which is **characterized in that** the first end of the limiting piece (3) and the reset assembly (2) are rotationally connected.

5. The UAV according to claim 1, which is **characterized in that** a chute (12) connected with the mounting groove (11) is also provided on the mounting piece (1), the reset assembly (2) is arranged in the chute (12), the reset assembly (2) includes a connected reset piece (21) and a slide block (22), the reset piece (21) is located between the slide block (22) and a bottom of the chute (12); the slide block (22) and the chute (12) slide together and are abutted against the piece to be transported (100); the limiting piece (3) is connected with the slide block (22).

6. The UAV according to claim 5, which is **characterized in that** a guide hole is arranged on the slide block (22), one side of the reset piece (21) near the slide block (22) is sleeved in the guide hole and can be abutted against a top wall of the guide hole.

7. The UAV according to claim 5, which is **characterized in that** the reset assembly (2) further includes a guide piece (23) arranged at the bottom of the chute (12), an end of the reset piece (21) away from the slide block (22) being sleeved on the guide piece (23).

8. The UAV according to claim 5, which is **characterized in that** an upper side wall of the mounting groove (11) is further provided with an avoidance groove (13) configured to ensure an automatic decoupling of the piece to be transported (100).

9. The UAV according to claim 5, which is **characterized in that** either of a side wall of the slide block (22) and a side wall of the slide groove (12) is provided with a protrusion (222), and the other is provided with a guide groove (122), the protrusion (222) slides and fits in the guide groove (122).

10. The UAV according to any of claims 1 to 9, which is **characterized in that** there are at least two delivery structures, and each delivery structure is connected to the UAV body.

## Patentansprüche

1. UAV zum Liefern eines zu befördernden Stücks (100), wobei das UAV einen UAV-Körper und eine Lieferstruktur enthält, wobei die Lieferstruktur Folgendes umfasst:
ein Montagestück (1), das mit dem UAV-Körper verbunden ist, und eine Montagenut (11), die auf dem Montagestück (1) angeordnet ist, wobei sich eine Richtung einer Öffnung der Montagenut (11) nach oben erstreckt und das zu befördernde Stück (100) konfiguriert ist, in die Montagenut (11) eingehakt zu werden; und
eine Rückstellanordnung (2), die konfiguriert ist, sich unter einem Gewicht des zu befördernden Stücks (100) zu verformen, wenn das zu befördernde Stück (100) angehoben wird, und sich zurückzustellen, derart, dass das zu befördernde Stück (100) von der Montagenut (11) weg angetrieben wird, wenn das zu befördernde Stück (100) den Boden berührt;
**dadurch gekennzeichnet, dass**
die Lieferstruktur ferner Folgendes umfasst:
ein Begrenzungsstück (3), wobei ein erstes Ende des Begrenzungsstücks (3) mit der Rückstellanordnung (2) verbunden ist und ein zweites Ende des Begrenzungsstücks (3) konfiguriert ist, durch magnetische Adsorption mit dem Montagestück (1) verbunden zu sein, um die Öffnung der Montagenut (11) abzudichten, wenn das zu befördernde Stück (100) eingehakt, jedoch nicht angehoben ist, wobei dann, wenn das zu befördernde Stück (100) angehoben wird, die Rückstellanordnung (2) konfiguriert ist, das Begrenzungsstück (3) derart anzutreiben, dass es sich bewegt, um das zweite Ende vom Montagestück (1) zu trennen.

2. UAV nach Anspruch 1, **dadurch gekennzeichnet, dass** das zweite Ende des Begrenzungsstücks (3) mit einem ersten magnetischen Stück und einem zweiten magnetischen Stück, das einer magnetischen Wirkung des ersten magnetischen Stücks entgegengerichtet ist, das auf dem Montagestück (1) angeordnet ist, versehen ist.

3. UAV nach Anspruch 2, **dadurch gekennzeichnet, dass** das erste magnetische Stück und das Begrenzungsstück (3) lösbar sind; und/oder
das zweite magnetische Stück und das Montagestück (1) lösbar sind.

4. UAV nach Anspruch 1, **dadurch gekennzeichnet, dass** das erste Ende des Begrenzungsstücks (3) und die Rückstellanordnung (2) rotatorisch verbunden sind.

5. UAV nach Anspruch 1, **dadurch gekennzeichnet, dass** außerdem eine Rinne (12), die mit der Montagenut (11) verbunden ist, auf dem Montagestück (1) vorgesehen ist, die Rückstellanordnung (2) in der Rinne (12) angeordnet ist, die Rückstellanordnung (2) ein verbundenes Rückstellstück (21) und einen Gleitblock (22) enthält, das Rückstellstück (21) zwischen dem Gleitblock (22) und einem Boden der Rinne (12) angeordnet ist; der Gleitblock (22) und die Rinne (12) zusammen gleiten und an dem zu befördernden Stück (100) anliegen; und das Begrenzungsstück (3) mit dem Gleitblock (22) verbunden ist.

6. UAV nach Anspruch 5, **dadurch gekennzeichnet, dass** ein Führungsloch auf dem Gleitblock (22) angeordnet ist, eine Seite des Rückstellstücks (21) in der Nähe des Gleitblocks (22) in das Führungsloch eingeführt ist und an einer oberen Wand des Führungslochs anliegen kann.

7. UAV nach Anspruch 5, **dadurch gekennzeichnet, dass** die Rückstellanordnung (2) ferner ein Führungsstück (23) enthält, das am Boden der Rinne (12) angeordnet ist, wobei ein Ende des Rückstellstücks (21), das vom Gleitblock (22) entfernt ist, auf das Führungsstück (23) aufgeschoben ist.

8. UAV nach Anspruch 5, **dadurch gekennzeichnet, dass** eine obere Seitenwand der Montagenut (11) ferner mit einer Vermeidungsnut (13) versehen ist, die konfiguriert ist, ein automatisches Entkoppeln des zu befördernden Stücks (100) sicherzustellen.

9. UAV nach Anspruch 5, **dadurch gekennzeichnet, dass** entweder eine Seitenwand des Gleitblocks (22) oder eine Seitenwand der Gleitrille (12) mit einem Vorsprung (222) versehen ist und die andere mit einer Führungsnut (122) versehen ist, der Vorsprung (222) in der Führungsnut (122) gleitet und dort hinein passt.

10. UAV nach einem der Ansprüche 1 bis 9, **gekennzeichnet durch** mindestens zwei Lieferstrukturen, die beide Lieferstruktur mit dem UAV-Körper verbunden sind.

## Revendications

1. Véhicule aérien sans équipage (VAE) destiné à livrer une pièce à transporter (100), dans lequel le VAE inclut un corps de VAE et une structure de livraison, dans lequel la structure de livraison comprend :
une pièce (1) de montage connectée au corps de VAE, et une rainure (11) de montage agencée sur la pièce (1) de montage, dans lequel une direction d'une ouverture de la rainure (11) de montage s'étend vers le haut, et la pièce à transporter (100) est configurée pour être accrochée dans la rainure (11) de montage; et
un assemblage (2) de réinitialisation est configuré pour se déformer sous un poids de la pièce à transporter (100) quand la pièce à transporter (100) est soulevé, se réinitialise pour amener la pièce à transporter (100) en éloignement de la rainure (11) de montage quand la pièce à transporter (100) touche le sol ;
**caractérisé en ce que**
la structure de livraison comprend en outre :
une pièce (3) de limitation, une première extrémité de la pièce (3) de limitation étant connectée à l'assemblage (2) de réinitialisation, et une seconde extrémité de la pièce (3) de limitation étant configurée pour être connectée à la pièce (1) de montage par adsorption magnétique pour étancher l'ouverture de la rainure (11) de montage quand la pièce à transporter (11) est accrochée mais n'est pas soulevée, dans lequel, quand la pièce à transporter (100) est soulevée, l'assemblage (100) de réinitialisation est configuré pour amener la pièce (3) de limitation à se déplacer de manière à séparer la seconde extrémité de la pièce (1) de montage.

2. VAE selon la revendication 1, qui est **caractérisé en ce que** la seconde extrémité de la pièce (3) de limitation est dotée d'une première pièce magnétique, et d'une seconde pièce magnétique opposée au magnétisme de la première pièce magnétique agencée sur la pièce (1) de montage.

3. VAE selon la revendication 2, qui est **caractérisé en ce que** la première pièce magnétique et la pièce (3) de limitation sont détachables ; et/ou la seconde pièce magnétique et la pièce (1) de montage sont détachables.

4. VAE selon la revendication 1, qui est **caractérisé en ce que** la première extrémité de la pièce (3) de limitation et l'assemblage (2) de réinitialisation sont connectés en rotation.

5. VAE selon la revendication 1, qui est **caractérisé en ce qu'**une goulotte (12) connectée à la rainure (11) de montage est également prévue sur la pièce (1) de montage, l'assemblage (2) de réinitialisation est agencé dans la goulotte (12), l'assemblage (2) de réinitialisation inclut une pièce (21) de réinitialisation connectée et un bloc (22) coulissant, la pièce (21) de réinitialisation étant située entre le bloc (22) coulissant et un fond de la goulotte (12) ; le bloc (22) coulissant et la goulotte (12) coulissent ensemble et viennent en butée contre la pièce à transporter (100) ; la pièce (3) de limitation est connectée au bloc (22) coulissant.

6. VAE selon la revendication 5, qui est **caractérisé en ce qu'**un trou de guidage est agencé sur le bloc (22) coulissant, un côté de la pièce (21) de réinitialisation près du bloc (22) coulissant étant emmanché dans le trou de guidage et pouvant venir en butée contre une paroi supérieure du trou de guidage.

7. VAE selon la revendication 5, qui est **caractérisé en ce que** l'assemblage (2) de réinitialisation inclut en outre une pièce (23) de guidage agencée au niveau du fond de la goulotte (12), une extrémité de la pièce (21) de réinitialisation en éloignement du bloc (22) coulissant étant emmanchée sur la pièce (23) de guidage.

8. VAE selon la revendication 5, qui est **caractérisé en ce qu'**une paroi latérale supérieure de la rainure (11) de montage est en outre dotée d'une rainure (13) d'évitement configurée pour assurer un découplage automatique de la pièce à transporter (100).

9. VAE selon la revendication 5, qui est **caractérisé en ce que** l'une d'une paroi latérale du bloc (22) coulissant et d'une paroi latérale de la rainure (12) coulissante est dotée d'une projection (122), et l'autre est dotée d'une rainure de guidage (122), la projection (222) coulissant et s'ajustant dans la rainure de guidage (122).

10. VAE selon l'une quelconque des revendications 1 à 9, qui est **caractérisé en ce qu'**il y a au moins deux structures de livraison, et chaque structure de livraison est connectée au corps de VAE.
